(19) Europäisches Patentamt
European Patent Office
Office européen des brevets

(11) EP 2 065 440 B1

(12) **EUROPEAN PATENT SPECIFICATION**

(45) Date of publication and mention of the grant of the patent:
**06.10.2010 Bulletin 2010/40**

(21) Application number: **09003425.7**

(22) Date of filing: **28.03.2006**

(51) Int Cl.:
***C08L 27/08*** *(2006.01)* ***C08K 3/34*** *(2006.01)*
***C08K 9/04*** *(2006.01)* ***B65D 75/36*** *(2006.01)*
***C08J 3/215*** *(2006.01)*

(54) **Process for the preparation of polyvinylidene chloride layered silicate nanocomposites**

Verfahren zur Herstellung von Polyvinylidenchlorid-Schichtsilikat-Nanokompositen

Procédé de préparation de nanocomposite de silicate à couches de chlorure de polyvinylidène

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.03.2005 US 666213 P**
**27.01.2006 US 341695**

(43) Date of publication of application:
**03.06.2009 Bulletin 2009/23**

(62) Document number(s) of the earlier application(s) in accordance with Art. 76 EPC:
**06748915.3 / 1 896 541**

(73) Proprietor: **Cryovac, Inc.**
**Duncan, SC 29334 (US)**

(72) Inventor: **Bekele, Solomon**
**Taylors**
**SC 29687 (US)**

(74) Representative: **Jackson, Martin Peter**
**J.A. Kemp & Co.**
**14 South Square**
**Gray's Inn**
**London WC1R 5JJ (GB)**

(56) References cited:
**WO-A-00/78540** **WO-A-2006/011143**
**US-A1- 2002 086 908** **US-A1- 2003 099 813**
**US-B1- 6 447 860**

- **DATABASE WPI Section Ch, Week 198845 Thomson Scientific, London, GB; Class A14, AN 1988-318106 XP002390086 -& JP 63 233836 A (TORAY IND INC) 29 September 1988 (1988-09-29)**
- **KIM YOUNGHOON ; WHITE JAMES L: "Polymer/ clay nanocomposites with halogenated polymers" ANNU TECH CONF ANTEC CONF PROC; ANNUAL TECHNICAL CONFERENCE - ANTEC, CONFERENCE PROCEEDINGS; ANTEC 2004 - ANNUAL TECHNICAL CONFERENCE PROCEEDINGS, VOLUME 3: SPECIAL AREAS 2004, vol. 3, May 2004 (2004-05), pages 3798-3802, XP009069401 US**

EP 2 065 440 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field Of The Invention

The present invention relates to a process for preparation of a polyvinylidene chloride layered silicate nanocomposite composition.

Background Of The Invention

Conventional blister packs typically include a base with one or, more commonly, a plurality of recesses that are surrounded by a shoulder, and a lid attached to the shoulder. Tablets, capsules, or other contents are accommodated in respective recesses, and may be removed therefrom by (1) pressing on the respective recess, thus making the contents penetrate the lid (usually an aluminum foil or the like), or by (2) removing the portion of the lid lying over the recess, thus gaining access to the contents of the recess.

In practice, a base is formed with recesses, and with a shoulder defining the base material in between the recesses; the recesses of the base are filled with tablets, etc.; the base, with the filled recesses, is covered with a lid; and the lid is sealed or otherwise adhered to the shoulder of the base.

The base of the blister pack is sometimes made up of an interior portion (to be adhered to the lid) of ACLAR™ PTFE (polychlorotrifluoroethylene), a material that is very expensive, and with less than optimal oxygen barrier properties. This material displays a moisture vapor transmission rate (MVTR) of typically about 0.4 grams/$m^2$ for one mil of thickness. The exterior portion of the base is often a PVC (polyvinyl chloride) of about 250 micrometer (10 mits) thickness. PVC, polyamides, polyolefins, polyesters are other materials which can be used to make the base. An aluminum foil can be added to the base.

The lid is typically made of aluminum foil or an aluminum foil laminate. Aluminum foil is a preferred material for the lids on blister packs as the thickness of the material employed requires relatively little force for it to rupture. Consequently, the energy for penetration is low and the aluminum exhibits essentially no elasticity. Plastic laminates may also be employed for the lid.

Some blister packs feature a lid provided with a line of weakness in the region of each recess. In others, each recess may be covered with an individual lid segment Within the line of weakness or on each lid segment may be a tab for gripping which enables the individual recess to be exposed by peeling back the lid segment

Provision of a vinylidene chloride copolymer, often referred to as "saran" or "PVdC", in a PVdC composition capable of providing a packaging film with a low moisture vapor transmission rate (MVTR), and also a low oxygen transmission rate (OTR), would be desirable for applications such as the blister-packaging of pharmaceutical products sensitive to both oxygen and moisture.

Stabilizers are often used in formulating PVdC-based compositions. These stabilizers reduce the thermal degradation of PVdC formulations during extrusion. Unfortunately, a trade-off in OTR and thermal stability must sometimes be made in designing such formulations. Thus, a composition having increased amounts of a stabilizer will sometimes result in enhanced thermal stability, but at the expanse of oxygen barrier properties. Conversely, improved (lower) OTR can be obtained by lowering the relative amounts of stabilizer in the formulation, but this may result in a less stable PVdC composition.

US Patent No. 6,673,406 (Bekele)
discloses a composition and film wherein a hydrophilic clay such as a modified montmorillonite is blended with a PVdC, and the blend is incorporated into a polymeric film having at least one layer.

Nanosilicates are available in natural (clays) or synthetic grades.

It has been found that the natural grades tend to disperse poorly when bulk blended into PVdC. Because of this poor dispersity, the oxygen barrier property of a film made from the PVdC/natural nanosilicate blend will not necessarily be enhanced.

Modified grades of the nanosilicates have better dispersion characteristics than the natural grades, and therefore generally better oxygen barrier. However, the surface treatment used to modify nanosilicates are based on alkyl quaternary ammonium chloride. Regardless of the alkyl component of this salt, it has been found that this material adversely affects the thermal stability of the PVdC into which it is blended.

It has also been found that there are loading limitations with respect to both natural and modified grades of nanosilicates when using an extrusion coating process. Extrusion coating is a well known process for making shrinkable bags containing PVdC. In general, in an extrusion coating process, less than 4% by weight of the PVdC blend can be made up of the nanosilicates.

It is therefore desirable to address the dispersibility, thermal stability, and loading issues raised by bulk blending of nanosilicates into PVdC.

Summary Of The Invention

In a first aspect, the present invention provides a process for in-situ polymerization of a polyvinylidene chloride layered silicate nanocomposite composition by a suspension process comprising:

a) preparing a monomers pre-mix comprising

i) vinylidene chloride, and
ii) a second monomer selected from

(a) vinyl chloride,
(b) styrene,
(c) vinyl acetate,
(d) acrylonitrile, and
(e) $C_1$-$C_{12}$ alkyl esters of (meth)acrylic acid;

b) preparing an aqueous dispersion of a nanoclay;
c) dispersing the aqueous dispersion of a nanoclay into the monomers pre-mix, wherein the nanoclay is present in an amount up to 10% by weight of the total monomer content of the dispersion;
d) providing a polymerization reactor;
e) purging the polymerization reactor with nitrogen;
f) heating the polymerization reactor to a reaction temperature;
g) pumping the monomers pre-mix, with the aqueous dispersion of a nanoclay dispersed therein, into the polymerization reactor;
h) agitating the monomers pre-mix, with the aqueous dispersion of a nanoclay dispersed therein, in the polymerization reactor at a desired agitation speed;
i) starting a polymerization reaction;
j) continuing the polymerization reaction until a predefined conversion of polymer is reached, and exfoliation of the nanoclay has been achieved;
k) stripping the polymer of unreacted monomers;
l) washing the stripped polymer;
m) separating the washed polymer from water; and
n) drying the polymer.

In a second aspect, the present invention provides a process for in-situ polymerization of a polyvinylidene chloride layered silicate nanocomposite composition by a suspension process comprising:

a) preparing a monomers pre-mix comprising

i) vinylidene chloride, and
ii) a second monomer selected from

(a) vinyl chloride,
(b) styrene,
(c) vinyl acetate,
(d) acrylonitrile, and
(e) $C_1$ -$C_{12}$ alkyl esters of (meth)acrylic acid;

b) preparing an aqueous dispersion of a nanoclay to produce a nanoclay slurry, wherein the aqueous dispersion of a nanoclay is pH adjusted to from 6 to 8;
c) providing a polymerization reactor;
d) purging the polymerization reactor with nitrogen;
e) heating the polymerization reactor to a reaction temperature;
f) pumping the monomers pre-mix into the polymerization reactor;
g) starting a polymerization reaction;
h) agitating the monomers pre-mix in the polymerization reactor at a desired agitation speed;
i) continuing the polymerization reaction until polymer conversion has reached at least 20%;
j) pumping the nanoclay slurry into the polymerization reactor;

k) continuing the polymerization reaction until a predefined conversion of polymer is reached, and exfoliation of the nanoclay has been achieved;
l) stripping the polymer of unreacted monomers;
m) washing the stripped polymer;
n) separating the washed polymer from water; and
o) drying the polymer.

In a third aspect, the present invention provides a process for in-situ polymerization of a polyvinylidene chloride layered silicate nanocomposite composition by a suspension process comprising:

a) preparing a monomers pre-mix comprising

i) vinylidene chloride, and
ii) a second monomer selected from

(a) vinyl chloride,
(b) styrene,
(c) vinyl acetate,
(d) acrylonitrile, and
(e) $C_1$-$C_{12}$ alkyl esters of (meth)acrylic acid;

b) preparing an aqueous dispersion of a nanoclay to produce a nanoclay slurry;
c) providing a polymerization reactor;
d) purging the polymerization reactor with nitrogen;
e) heating the polymerization reactor to a reaction temperature;
f) pumping the monomers pre-mix into the polymerization reactor;
g) starting a polymerization reaction;
h) agitating the monomers pre-mix in the polymerization reactor at a desired agitation speed;
i) continuing the polymerization reaction until a predefined conversion of polymer is reached; then
j) pumping the nanoclay slurry into the polymerization reactor;
k) continuing the agitation until exfoliation of the nanoclay has been achieved;
l) stripping the polymer of unreacted monomers;
m) washing the stripped polymer;
n) separating the washed polymer from water, and
o) drying the polymer.

Definitions

"Polyvinylidene chloride layered silicate nanocomposite" and "PVdC layered silicate nanocomposite" and the like herein refer to a polymer prepared in-situ in a suspension process and or an emulsion process. The in-situ process enables polymer penetration that results in finite expansion of the silicate crystals producing intercalated polymer/clay hybrids. With exfoliation extensive polymer penetration and delamination of the silicate crystallites is achieved resulting in nanoscale silicate layers suspended in a PVdC matrix. In a method of making the polymer, a high polarity aqueous dispersion of a nanoclay is pre-dispersed in the monomers pre-mix before polymerization. The nanoclay clan be a kaolin, a talc, a smectite, a vermiculite or a mica. The pre-dispersion of the nanoclay can be as high as 10% by weight of the total monomer content of the suspension. After the pre-mix is prepared the conventional steps of polymerization and post polymerization are carried out. The result is a vinylidene chloride copolymer, having vinylidene chloride monomer and a comonomer such as vinyl chloride, styrene, vinyl acetate, acrylonitrile, and C1-C12 alkyl esters of (meth)acrylic acid (e.g., methyl acrylate, butyl acrylate, methyl methacrylate, etc.) and also including up to 10%, by weight of the composition, of a nanosilicate. "(meth)acrylic acid" herein refers to both acrylic acid and/or methacrylic acid; "(meth) acrylate" herein refers to both acrylate and methacrylate; "polymer" herein refers to the product of a polymerization reaction, and is inclusive of homopolymers, copolymers, terpolymers, tetrapolymers, etc.; "copolymer" herein refers to a polymer formed by the polymerization reaction of at least two different monomers and is inclusive of random copolymers, block copolymers, graft copolymers, etc.;
"ethylene/alpha-olefin copolymer" (EAO) herein refers to copolymers of ethylene with one or more comonomers selected from $C_3$ to $C_{10}$ alpha-olefins such as propene, butene-1,hexene-1, octene-1, etc. in which the molecules of the copolymers comprise long polymer chains with relatively few side chain branches arising from the alpha-olefin which was reacted with ethylene. This molecular structure is to be contrasted with conventional high pressure low or medium density polyethylenes which are highly branched with respect to EAOs and which high pressure polyethylenes contain both long chain and short chain branches. EAO includes such heterogeneous materials as linear medium density polyethylene (LMDPE), linear low density polyethylene (LLDPE), and very low and ultra low density polyethylene (VLDPE and ULDPE), such as DOWLEX™ or ATTANE™ resins supplied by Dow, ESCORENE™ or EXCEEDT™ resins supplied by Exxon; as well as linear homogeneous ethylene/alpha olefin copolymers (HEAO) such as TAFMER™ resins supplied by Mitsui Petrochemical Corporation, EXACT™ resins supplied by Exxon, or long chain branched (HEAO) AFFINITY™ resins supplied by the Dow Chemical Company, or ENGAGE™ resins supplied by DuPont Dow Elastomers;
"package" herein refers to a film configured around a product;
"film" herein refers to plastic web materials having a thickness of 0.50 mm (20 mils) or less such as 0.25 mm (10 mils) or less;
"seal layer" herein refers to a layer of a film that can be involved in the sealing of the film to itself or another layer;
"seal" herein refers to a bonding of a first film surface to a second film surface created by heating (e.g., by means of a heated bar, hot air, infrared radiation, ultrasonic sealing, etc.) the respective surfaces to at least their respective seal initiation temperatures;
"barrier herein refers to a layer of a film that can significantly retard the transmission of one or more gases (e.g., $O_2$);
"abuse layer" herein refers to a layer of a film that can resist abrasion, puncture, and/or other potential causes of reduction of package integrity, and/or potential causes of reduction of package appearance quality,
"tie layer" herein refers to a layer of a film that can provide interlayer adhesion to adjacent layers that include otherwise nonadhering or weakly adhering polymers;
"bulk layer" herein refers to a layer of a film that can increase the abuse resistance, toughness, or modulus of a film;
"lamination" herein refers to the bonding of two or more film layers to each other, e.g. by the use of polyurethane adhesive;
"total free shrink" means the percent dimensional change in a 10 cm×10 cm specimen of film, when shrunk at a specified test temperature such as 85° C. (185° F.), with the quantitative determination being carried out according to ASTM D 2732, as set forth in the 1990 Annual Book of ASTM Standards, vol. 08.02, 368-371, the entire disclosure of which is incorporated herein by reference. "Total free shrink" refers to the totality of the free shrink in both the longitudinal direction and the transverse direction.
"machine direction" herein refers to the direction along the length of a film, i.e., in the direction of the film as it is formed during extrusion and/or coating; and
"transverse direction" herein refers to the direction across a film, i.e., the direction that is perpendicular to the machine direction.
"Linear low density polyethylene" (LLDPE) herein refers to polyethylene having a density from 0.917 to 0.925 grams per cubic centimeter, made by Zeigler/Natta catalysis.
"Linear medium density polyethylene" (LMDPE) herein refers to polyethylene having a density from 0.926 grams per cubic centimeter to 0.939 grams per cubic centimeter, made by Zeigler/Natta catalysis.

The term "orientation ratio" (i.e., the product of the extent to which a film is oriented in several directions, usually two directions perpendicular to one another) is used when describing the degree of orientation of a given film. Orientation in the machine direction is referred to as "drawing", whereas orientation in the transverse direction is referred to as "stretching. For films extruded through an annular die, stretching is obtained by blowing the film to produce a bubble. For such films, drawing is obtained by passing the film through two sets of powered nip rolls, with the downstream set having a higher surface speed than the upstream set, with the resulting draw ratio being the surface speed of the downstream set of nip rolls divided by the surface speed of the upstream set of nip rolls.

All compositional percentages used herein are presented on a "by weight" basis, unless designated otherwise.

Brief Description of the Drawings

A detailed description of embodiments of the invention follows, with reference to the attached drawings, wherein:

FIG.1 is a schematic cross-section of a monolayer film;
FIG. 2 is a schematic cross-section of a two layer film;
FIG. 3 is a schematic cross-section of a three layer film;
FIG. 4 is a schematic cross-section of a four layer film;
FIG. 5 shows a longitudinal section through a blister pack;
FIG. 6 shows a plan view of the blister pack of FIG. 5;
FIG. 7 shows a cross-section through the blister pack of FIG. 6; and
FIG. 8 shows an expanded fragmentary cross-sectional view of the blister pack of FIGURE 6.

## Detailed Description Of The Invention

### In Situ Polymerization

Clays are naturally occurring minerals and hence their composition is quite variable. The purity of the clay will affect the final composite properties. Many clays are aluminosilicates which have sheet like layered structures and consist of silica $SiO_4$ tetrahedral bonded to alumina $AlO_6$ octahedral in a variety of ways. A 2:1 tetrahedral to the octahedral results in smectite days. Among smectites the most common is montmorillonite (bentonite). Other metals such as magnesium may replace aluminum in the crystal structure. These clays of magnesiosilicates are hectorites. Depending on the composition of the clay the sheets or layers carry a charge on the surface and on the edges. This charge is balanced by counter-ions which are located part in the inter-layer spacing of the day. The thickness of the layers or platelets is in the order of 1nm and the aspect ratio range is 100-1500. The molecular weight of the platelets [$1.3x10^e$] is considerably greater than for most polymers. Furthermore platelets are not all rigid but have some degree of flexibility. They also possess very high surface areas, several hundred square meters per gram. They also are capable of ion exchange capacities. Clays due to their charge nature in general are highly hydrophilic species and hence they are incompatible with polymeric systems. Thus, a necessary requirement to make clays compatible with polymers is to alter their polarity and render them organophilic. This is achieved by ion exchange of the hydrophilic clay with an organic cation such as an alkylammonium ion. In montmorrilonite the sodium ions in the clay can be exchanged for an amino acid such as 12-aminododecanoic acid[ADA].

$$Na^+\text{-CLAY} + HO_2C\text{-R-}NH_3{+}Cl^- \rightarrow \cdot HO_2C\text{-R-}NH_3^+\text{ -CLAY} + NaCl$$

In addition to montmorillonite and hectorite other synthetic clays such as hydrotalcite can be produced in a very pure form and can carry a positive charge on the platelet

The final nanocomposite can be intercalated or exfoliated.

In an intercalated system, the organic polymer (PVdC) can be inserted between the layers of clay such that the inter-platelet spacing is expanded but the layers still maintain a well-defined spatial relationship to each other.

In exfoliation the platelets are completely separated and the individual layers are distributed throughout the polymeric (PVdC) matrix.

By modifying the surface polarity of the day, onium ions can allow thermodynamically favorable penetration of polymer precursors into the interlayer region. The ability of the onium ions to assist in delamination of the clay depends on its chemical nature such as its polarity. For positively charged clays such as hydrotalcite, the onium salt modification is replaced by use of an ionic surfactant Other types of clay modifications include ion-dipole interactions, silane coupling agents and use of block copolymers and graft copolymers.

PVdC-Nanoclay nanocomposite in connection with the invention can be prepared by free radical suspension polymerization or free radical emulsion polymerization. A nanoclay slurry is predispersed in a water phase with appropriate suspending agents and pH adjusted to from 6 to 8. This slurry is pumped to the polymerization reactor when polymer conversion has reached at least 20%. Reaction continues after the nanoclay slurry addition until the desired conversion of polymer is reached.

Another method that can be used is to add the nanoclay slurry to the reactor after the specified polymer conversion is reached and the reaction is terminated.

In both cases, the proper reaction agitation is maintained, or increased if there is a rise in the viscosity of the system, and sufficient time should be allowed to achieve the desired exfoliation of the nanoclay.

The typical steps of suspension polymerization of PVdC can be followed. These steps include the preparation of monomers such as vinylidene chloride ($CH_2 = CCl_2$) and vinyl chloride, and the use of water, initiators, suspending agents, antioxidants, etc. Monomer units can also be derived from styrene, vinyl acetate, acrylonitrile, and $C_1$ -$C_{12}$ alkyl esters of (meth)acrylic acid (e.g., methyl acrylate, butyl acrylate, methyl methacrylate, etc.)The production of PVdC (saran) is well known in the art Preparation of the reactor includes purging with nitrogen, heating up to reaction temperature, agitating the mixture of water, monomers, and other additives at the desired agitation speed. The reaction is then started, and the reaction taken to the defined conversion.

After the reaction is completed, the polymer can be stripped of unreacted monomers, washed and separated from the water and dried. The dried nanocomposite is then formulated with proper processing additives and made into a film. Processing additives can be reactor added or blended later on.

Figure 1 of the present specification shows a monolayer film 10 having a single layer 11.

Layer 11 comprises the polyvinylidene chloride layered sulfate nanocomposite of the invention.

Figure 2 shows a two layer film 20 having a layer 21 and a layer 22.

Layer 21 comprises the polyvinylidene chloride layered silicate nanocomposite disclosed above for layer 11 of Figure 1.

Layer 22 can comprise any suitable polymeric material, such as a thermoplastic polymeric material, such as an olefinic polymer, such as an ethylenic polymer, such as an ethylene homopolymer or copolymer, such as ethylene/alpha-olefln copolymer, such as heterogeneous or homogeneous ethylene/alpha-olefin copolymers.

Layer 22 can comprise an olefinic polymer or copolymer such as ethylene/vinyl acetate copolymer, ethylene/alkyl acrylate copolymer, ethylene/(meth)acrylic acid copolymer; ionomer, propylene homopolymer and copolymer, and butylene homopolymer and copolymer.

Blends of any of the herein disposed materials for layer 22 can be included in layer 22.

Figure 3 shows a three layer film 30 having layers 31, 32, and 33.

Layer 31 comprises the polyvinylidene chloride layered silicate nanocomposite disclosed above for layer 11 of Figure 1.

Layers 32 and 33 comprises any of the polymers disclosed above for layer 22 of Figure 2.

Layers 32 and 33 can be the same, or can be different The difference can be in composition, in one or more physical properties, in thickness, in amount or type of additives, in degree of crosslinking or orientation, or the like. For example, layer 32 can comprise an ethylene/vinyl acetate with 6% vinyl acetate, while layer 33 can comprise an ethylene/vinyl acetate with 9% vinyl acetate. As another example, layer 32 can comprise an ethylene/vinyl acetate with 6% vinyl acetate, while layer 33 can comprise an ethylene/alpha-olefin copolymer. Film structures can thus be depicted as A/B/A or as A/B/C, where A, B, and C each represent a distinct layer of a multilayer film.

A multilayer film structure may have
at least four layers. Such a film 40 (see Figure 4) includes a seal layer 43, a bulk layer 44, an $O_2$ -barrier layer 41 comprising the polyvinylidene chloride layered silicate nanocomposite, and an abuse layer 42. Layers 43, 41, and 42 can correspond In composition to any of layers 22, 32, and 33 of the previous figures. The bulk layer 44 can be disposed between the seal layer 43 and the $O_2$ -barrier layer 41, and the $O_2$ - barrier layer 41 can be disposed between the bulk layer 44 and the abuse layer 42. If desired, tie layers, comprising polymeric adhesives, can be disposed between the seal layer 43 and the bulk layer 44, as well as between the $O_2$ -barrier layer 41 and the abuse layer 42.

Bulk layer 44 can comprise any of the materials disclosed for layers 32 and 33 of Figure 3.

The film can have any total thickness desired, so long as the film provides the desired properties for the intended end use. Thicknesses can range from 2.5-500μm (0.1 to 20mils), such as 7.6-400μm (0.3 to 16 mils), 13-300μm (0.5 to 12 mils), 18-200μm (0.7 to 8 mils), 25-150μm (1.0 to 6 mils), and 33-100μm (1.3 to 4 mils).

FIG. 6 shows a conventional blister pack 50 for packaging pharmaceutical products such as tablets. The lid 52 is joined to the base 56 at the shoulders 54 of base 56 (see also Figure 5). A plurality of recesses 58, each designed to accommodate a tablet, capsule, or other pharmaceutical product, are covered by lid 52. The lid 52 is conventionally a metal or metalized foil. FIG. 5 shows a longitudinal section through the blister pack 50. The base 56 with recesses 58 makes contact with the lid 52 at the shoulders 54. In the region of the shoulders 54 the lid 52 is joined to the base 56, e.g. by sealing or adhesive bonding (sealing/adhesive not shown for sake of clarity). FIG. 7 shows a cross-section through the blister pack 50 with its base 56, lid 52 and recesses 58.

Figure 8 shows an expanded fragmentary sectional view of blister pack 50, using film of the present invention. Base 56 is made up of an interior film 62 and an exterior film 60.

Interior film 62 comprises the film of the present invention. Film 62 can be a collapsed lay-flat film. This film can provide good (low) MVTR as well as low OTR for pharmaceutical applications.

Exterior film 60 can be any suitable film, such as the PVC (polyvinyl chloride) film used in some blister packages.

Alternatively, the base can comprise a single film comprising the above described film , without the need for an additional film 60.

In another alternative, the film can comprise the exterior film, and another film can form the interior film 62.

Those skilled In the art will understand that various combinations can be made, provided a film as described above is present in the base.

The film can form the lid of the blister pack, and a conventional foil or plastic film can form the base.

Films 62 and 60 can be bonded together by any suitable means, such as lamination, coextrusion, extrusion coating, extrusion lamination, heat sealing, gluing, etc.

The base of the present blister pack can be embossed, deep drawn or vacuum shaped.

The lid can in one embodiment comprise an aluminum foil or a laminate containing aluminum foil, or a plastic that exhibits low elasticity and poor stretching properties.

The base can have e.g. from 6 to 30 recesses in the form of cups or dishes. The recesses are surrounded by a shoulder, the shoulder forming an interconnected flat plane. The base can be prepared e.g. as an endless strip with the contents in the recesses and brought together with the lid, in particular in lid foil form, likewise in the form of an endless strip. The lid covers the base completely and e.g. by sealing or adhesive bonding is joined to the base at the shoulders. The lid can be sealed or adhesively bonded to the shoulder over the whole area or, by choosing a special sealing tool or bonding pattern for the purpose, this sealing or bonding may be only partial. Next, the endless strip of lidded base can be cut to the desired size. This may be performed e.g. using a stamping tool. At the same time, the blister pack may be given outer contours, or it is possible to provide weaknesses in the lid material or the base in order to allow the blister pack to be bent or to create lid segments, making easy removal of the lid segment and removal of the contents possible.

The polyvinylidene chloride layered silicate nanocomposite can include any suitable vinylidene chloride-containing copolymer, i.e., a copolymer that includes monomer units derived from vinylidene chloride ($CH_2 = CCl_2$) and also monomer units derived from one or more of vinyl chloride, styrene, vinyl acetate, acrylonitrile, and $C_1$-$C_{12}$ alkyl esters of (meth)acrylic acid (e.g., methyl acrylate, butyl acrylate, methyl methacrylate, etc.). Thus, suitable PVdC resins include e.g. one or more of vinylidene chloride/vinyl chloride copolymer, vinylidene chloride/methyl acrylate copolymer, vinylidene chloride/acrylonitrile copolymer, vinylidene chloride/butyl acrylate copolymer, vinylidene chloride/styrene copolymer, and vinylidene chloride/vinyl acetate copolymer. The weight percent of the vinylidene chloride monomer is preferably from 75% to 96% by weight of the copolymer exclusive of the nanosilicate content; the weight percent of the second monomer, e.g. vinyl chloride, is preferably from 4% to 25% by weight of the copolymer exclusive of the nanosilicate content.

The stabilizer can include one or more of:

1) epoxidized compounds, such as epichlorohydrin/bisphenol A, epoxidized soybean oil, epoxidized linseed oil, butyl ester of epoxidized linseed oil fatty acid, epoxidized octyl tallate, epoxidized glycol dioleate, and the like, and mixtures thereof;
2) oxidized polyethylene;
3) 2-ethyl hexyl diphenyl phosphate;
4) chlorinated polyethylene;
5) tetraethylene glycol di(2-ethylhexoate);
6) a metal salt of a weak inorganic acid, e.g., tetrasodium pyrophosphate;
7) a soap of a fatty acid, e.g., calcium ricinoleate; and
8) a hydrotalcite such as magnesium aluminum hydroxycarbonate available from MITSUI™ under the trademark DHT4A™, or ALCAMIZER™ 1 available from Kisuma Chemicals.

Commercial examples of epoxidized compounds include epichlorohydrin/bisphenol A, an epoxy resin available from Shell as EPON™ 828; epoxidized soybean oil, available from Viking Chemical Company as VIKOFLEX™ 7177; epoxidized linseed oil, available from Viking Chemical Company as VIKOFLEX™ 7190; butyl ester of epoxidized linseed oil fatty acid, available from Viking Chemical Company as VIKOFLEX™ 9040; epoxidized octyl tallate, available from C. P. Hall Company as Monoplex S-73; and epoxidized glycol dioleate, available from C. P. Hall Company as MONOPLEX™ S-75.

The stabilizer can comprise 0.1, 0.5,1, 2, 3, 4, 5, 6, 7, 8, 9, or 10 parts by weight of the polyvinylidene chloride layered silicate nanocomposite composition of the invention, such as from 0.5 to 5, such as from 1 to 3, such from 1.5 to 2 parts by weight of the polyvinylidene chloride layered silicate nanocomposite composition.

Commercial examples of a stabilizer include FERRO™ PLASCHEK™ 775, an epoxidized soybean oil, and calcium ricinoleate available from Acme-Hardesty Company.

The polymeric processing aid can include one or more of:

1) a soap of a fatty acid, e.g., calcium ricinoleate;
2) a terpolymer having an acrylate comonomer, such as methyl methacrylate/butyl acrylate/styrene terpolymer; methyl methacrylate/butyl acrylate/butyl methacrylate terpolymer, or blends thereof;
3) n-(2-hydroxyethyl)-12 hydroxy stearamide; and
4) propylene glycol mono-ricinoleate.

The polymeric processing aid can comprise 0.1, 0.5,1, 2, 3, 4, 5, 6, 7, 8, 9, or 10 parts by weight of the polyvinylidene chloride layered silicate nanocomposite composition e.g. the polymeric processing aid comprises from 0.5 to 5, such as from 1 to 3, such as from 1.5 to 2 parts by weight of the polyvinylidene chloride layered silicate nanocomposite composition.

A commercial example of a polymeric processing aid is ELF ATOCHEM™ ME-TABLEN™ L1000, an acrylic polymeric processing aid.

It will be noted that a soap of a fatty acid, e.g., calcium ricinoleate, can function as both a stabilizer and a polymeric processing aid. The soap of the fatty acid can comprise 0.1, 0.5, 1, 2, 3, 4, 5, 6, 7, 8, 9, or 10 parts by weight of the polyvinylidene chloride layered silicate nanocomposite composition. For example, the soap of a fatty acid can comprise from 0.5 to 5, such as from 1 to 3, such as from 1.5 to 2 parts by weight of the polyvinylidene chloride layered silicate nanocomposite composition.

Other co-stabilizing polymeric processing aids can optionally be included in the composition, such as HENKEL™ LOXIOL™ VPG1732, a high molecular weight complex ester, and CASCHEM™ CASTOWAX™ NF, a hydrogenated castor oil.

The nanosilicate can include one or more clays of the phylllosilicate group, including one or more of:

1) dioctahedral clays such as montmorillonite, beidellite, and nontronite, and
2) trioctahedral clays such as saponite, hectorite, and sauconite; and in particular oxonium ion modified forms of these clays.

The nanosilicate can comprise 0.1, 0.5, 1, 2, 3, 4, 5, 6, 7, 8, 9, or 10 parts by weight of the polyvinylidene chloride layered silicate nanocomposite composition

, e.g. the nanosilicate can comprise from 0.5 to 8, such as from 1 to 5, such as from 1.5 to 4 parts by weight of the polyvinylidene chloride layered silicate nanocomposite composition.

Commercial examples of nanosilicates include CLOISITE™ 20A and CLOISITE™ 15A, which are oxonium ion modified montmorillonite clay from Southern Clay Products; NANOMER™ I.31PS, which is an oxonium ion modified montmorillonite clay from Nanocor; BENTONE™ 107 and BENTONE™ 111, which are bentonite clays (a subset of smectite); BENTONE™ 108 and BENTONE™ 166, which are hectorite clay (also a subset of smectite, the BENTONE™ clays available from Element Specialties; a nanotalc having the composition $Mg_3SiO_{10}(OH)_2$ available from Nanova LLC; and a nanotalc (phyllosilicate) available from Argonne National Laboratory.

Optionally, the composition and film can include an acid (hydrogen chloride) scavenger. If present, the add scavenger can comprise from 0.1 to 4, such as from 0.5 to 2, parts by weight of the polyvinylidene chloride layered silicate nanocomposite composition of the invention.

A commercial example of an add scavenger is MITSUI™ DHT4A, a magnesium aluminum hydroxycarbonate of formula $Mg_{4.5}Al_2(OH)_{13}CO_33.5H_2O$. An alternative material is tetrasodium pyrophosphate (TSPP).

Determination of the overall thermal stability of the polyvinylidene chloride layered silicate nanocomposite composition can be carried out by working the composition between a pair of heated rollers or inside a heated mixing chamber. The time required to produce a noticeably blackened polymer due to shear degradation and temperature-induced degradation is a measure of the effectiveness of the thermal stability of the composition. Commercially acceptable vinylidene chloride copolymer blends show thermal stability times of at least 10 minutes in a mixing device such as a BRA-BENDER™ blender running at about 168° C. (335° F.) and 63 revolutions per minute.

The composition can be extruded and processed in any of a number of methods known to those of ordinary skill in the art so as to form a film or a layer of a multilayer film, for example, by the methods disclosed in U.S. Pat. Nos. 3,741,253 (Brax et al.), 4,278,738 (Brax et al.), and 4,284,458 (Schirmer).

Thus, any suitable method of making a film having an oxygen barrier layer can be used to make a film so long as the method utilizes an above-described polyvinylidene chloride layered silicate nanocomposite composition. Suitable methods include tubular cast coextrusion, such as that shown in U.S. Patent 4,551,380 [Schoenberg], tubular or flat cast extrusion, or blown bubble extrusion (for monolayer films) or coextrusion (for multilayer films) by techniques well known in the art. Multilayer films can be made by coextrusion, extrusion coating, extrusion lamination, corona bonding or conventional lamination of all the film layers. A method of producing a multilayer film having a PVdC layer is disclosed in U.S. Pat. No. 4,112,181, issued on Sept. 5, 1978 to Baird, Jr. et al. This patent describes a method of coextruding a tubular film wherein the walls of the tube have at least three layers, a center layer being a PVdC layer. The tubular film is subsequently biaxially oriented by the trapped bubble technique. The 3-layer film may be cross-linked by electron beam irradiation.

A satisfactory method of producing a multilayer saran film is disclosed in U.S. Pat. No. 3,741,253, issued on June 26,1973 to Brax et al

, which discloses a multilayer, biaxially oriented film having a PVdC barrier layer. This film is made by an extrusion coating process in which a substrate layer or layers of a polymer such as polyethylene or ethylene vinyl acetate copolymer is extruded in the form of a tube, cross-linked by irradiation, and inflated. A layer of PVdC is extrusion coated onto the inflated tubing, and another layer or layers of polymer is simultaneously or sequentially extrusion coated onto the PVdC. After cooling, this multilayer tubular structure is flattened and rolled up. Then, the tube is inflated, and heated to its orientation temperature, thereby biaxially orienting the film. The bubble is rapidly cooled to set the orientation. This process produces a heat shrinkable barrier film with low oxygen permeability. Also, the advantages of a cross-linked film are provided without subjecting the PVdC layer to irradiation which tends to degrade saran. The barrier layer In the examples of the patent to Brax et al is a plasticized copolymer of vinylidene chloride and vinyl chloride.

The film can be cross-linked or non-cross-linked, oriented or unoriented, heat shrinkable or non-heat shrinkable. Where the film is heat shrinkable, it has a total free shrink at 85° C. (185° F.) of from 10 to 100%. All or a portion of the film of the present invention can be irradiated to induce crosslinking. In the irradiation process, the film is subjected to an energetic radiation treatment, such as corona discharge, plasma, flame, ultraviolet, X-ray, gamma ray, beta ray, and high energy electron treatment, which induces crosslinking between molecules of the irradiated material. The proper dosage level can be determined by standard dosimetry methods known to those of ordinary skill in the art, and the precise amount of radiation to be used is of course dependent on the particular film structure and its end use. The film can be irradiated at a level of from 0.5-15 megarads (MR) (5 to 150 KGrays), such as 1-12 MR. Further details on the irradiation of polymeric films can be found in, for example, U.S. Pat. Nos. 4,064,296 (Bornstein et al.), 4,120,716 (Bonet), and 4,879,430 (Hoffman).

The films can be made by tubular coextrusion, and by extrusion coating. In the latter case, a substrate is extruded or coextruded, optionally irradiated, then optionally stretch oriented; and then a layer of the polyvinylidene chloride layered silicate nanocomposite as disclose herein is extrusion coated, optionally with at least one additional layer, to the substrate.

Films of the invention can have the following structures:

| Film Structure |
|---|
| A/B |
| A/C |
| B/A/B |
| C/A/C |
| C/A/B |
| B/A/D/B |
| C/A/D/C |
| C/A/D/B |

Where:

A = polyvinylidene chloride layered silicate nanocomposite.
B, C, and D = any of the materials disclosed above for layers 43, 44, and 42 respectively of Figure 4.

The polymeric components used to fabricate film can also contain appropriate amounts of other additives normally included in or blended with such compositions. These include slip agents, antioxidants, fillers, dyes, pigments, radiation stabilizers, antistatic agents, elastomers, and other additives known to those of skill in the art of packaging films.

The multilayer film can have any total number of layers and any total thickness desired as long as the film provides the desired properties for the particular packaging operation in which the film is used

The film layer comprising PVdC (polyvinylidene chloride layered silicate nanocomposite) can be irradiated up to a dosage level of 15 MR without significant change to (degradation of) the film. However, chlorinated species are generated and may not be FDA accepted.

As is known to those of skill in the art, the use of a polymer comprising mer units derived from vinylidene chloride and methyl acrylate reduces the degrading effect of irradiation on the PVdC.

The film can be laminated, adhesively adhered, extrusion coated, or extrusion laminated onto a substrate to form a laminate. Lamination can be accomplished by joining layers with adhesives, joining with heat and pressure, and even spread coating and extrusion coating.

The film is especially suitable for packaging applications in which the product(s) being packaged is to be protected from atmospheric $O_2$. More particularly, film is especially useful as blister packaging for pharmaceuticals, as a film suitable for use as a barrier bag, and as a film suitable for use in a patch bag.

A blister package can be made, with the above-disclosed PVdC composition and the film made therefrom, by conventional techniques and in a conventional packaging format.

Table 1

| Table of prophetic OTR and MVTR Data for polyvinylidene chloride layered silicate nanocomposite | | | | |
|---|---|---|---|---|
| Example | Composition | OTR, cc.mil/sq.m.day.atm at 73F and 0%RH | MVTR, g.mil/sq.m at 100F and 100%RH | Comments |
| Comparative 1 | VDC/MA[1] 100phr<br>ESO[2] 2phr<br>PA[3] 2phr | 3.8 | 1.30 | Table 1, Comparative Example 1 of US6673406 |
| Comparative 2 | VDC/MA[1,4] 100phr<br>ESO 2phr<br>PA 2phr<br>CLOISITE™ 20A 2phr | 2.4 | 0.99 | Table 1, Example 1 of US6673406 |
| Comparative 3 | VDC/MA[1] 100phr<br>ESO 2phr<br>PA 2phr<br>Cloisite 20A 4phr | 2.0 | 0.83 | Table 1, Example 2 of US6673406 |
| 1 | VDC/MA 100phr<br>ESO 2phr<br>PA 2phr<br>Cloisite Na+[5] 2phr | 0.90 | 0.30 | In-situ suspension polymerization nanocomposite |
| 2 | VDC/MA 100phr<br>ESO 2phr<br>PA 2phr<br>Bentone ND[6] 2phr | 0.85 | 0.28 | In-situ suspension polymerization nanocomposite |
| 3 | VDC/MA[1] 100phr<br>ESO 2phr<br>PA 2phr<br>Nanotalc[7] 2phr | 0.80 | 0.24 | In-situ suspension polymerization nanocomposite |
| 4 | VDC/MA[1] 100phr<br>ESO 2phr<br>PA 2phr<br>Nanotalc[7] 4phr | 0.60 | 0.18 | In-situ suspension polymerization nanocomposite |
| 5 | VDC/MA[1] 100phr<br>ESO 2phr<br>PA 2phr<br>Nanotalc[7] 8phr | 0.50 | 0.15 | In-situ suspension polymerization nanocomposite |
| 6 | VDC/MA[8] 100phr<br>ESO 2phr<br>PA 2phr<br>Nanotalc[7] 2phr | 0.40 | 0.16 | In-situ suspension polymerizatlon nanocomposite |
| 7 | VDC/MA[8] 100phr<br>ESO 2phr<br>PA 2phr<br>Nanotalc[7] 4phr | 0.25 | 0.10 | In-situ suspension polymerization nanocomposite |

(continued)

| Table of prophetic OTR and MVTR Data for polyvinylidene chloride layered silicate nanocomposite | | | | |
|---|---|---|---|---|
| Example | Composition | OTR, cc.mil/sq.m.day.atm at 73F and 0%RH | MVTR, g.mil/sq.m at 100F and 100%RH | Comments |
| 8 | VDC/VC[9] 100phr<br>ESO 1phr<br>PA 1phr<br>Nanotalc[7] 4phr | 0.80 | 0.25 | In-situ suspension polymerization nanocomposite |
| 9 | VDC/ MA[8] 100phr<br>ESO 1phr<br>PA 1phr<br>Nanotalc[7] 4phr | 0.15 | 0.08 | In-situ suspension polymerization nanocomposite |
| Notes to Table 1<br>1. 6-9 wt% MA comonomer.<br>2: Epoxidized soybean oil.<br>3: Polymeric processing aid.<br>4: Smectite clay[montmorillonite] surface treated with organic quaternary ammonium salt. 5: Natural smectite from Southern Clay Products Inc,<br>6: Natural montmorillonite from Elementis Specialties.<br>7: Nanotalc of phyllosilicate from Argonne National Labs.<br>8: 3- 6wt% MA comonomer.<br>9: VDC-VC where the wt % of the vinyl chloride is between 8 and 14% by weight of the VDC-VC copolymer.<br>10: AS is an add scavenger. | | | | |

Also note that "phr" means pounds per hundred (weight units) of material. Thus, by way of example, in the film of the first comparative example, the equivalent of 100 pounds of the VDC/MA resin was blended with 2 pounds of the ESO material, and 2 pounds of the polymeric processing aid. An equivalent to phr is "parts by weight". For the examples, the VDC/MA is listed separately from the Nanotalc (the nanosilicate) to indicate relative amounts of each material present in the examples, but it will be understood that the nanosilicate in fact forms part of the polyvinylidene chloride layered silicate nanocomposite structure.

Additional Prophetic Examples

Example 10

A four layer film is coextruded by a hot blown process as an annular tube, the film having the construction:

$$EVA_1/EVA_2/PVdC/EVA_2$$

Where:

$EVA_1$ = EVA with 3.3 wt. % vinyl acetate content, available from Huntsman as PE1335™.
PVdC = polyvinylidene chloride layered silicate nanocomposite.
$EVA_2$= EVA with 28 wt. % vinyl acetate content, available from DuPont as EL-VAX™3182-2.

After extrusion, the tubular coextrudate is collapsed on itself to form a lay flat film having the construction:

$$EVA_1/EVA_2/PVdC/EVA_2 \;//\; EVA_2/PVdC/EVA_2/EVA_1$$

A preferred thickness for each PVdC layer is 0.75 mils.

Example 11

A four layer film like that of the earlier example is made, by a cast coextrusion process, but where the outer $EVA_1$ layer is replaced with a LLDPE. The film thus has the construction:

$$LLDPE/EVA_2/PVdC/EVA_2$$

Two commercial LLDPE resins, each useful for this Example, are DOWLEX 2045.03 and DOWLEX 2045.04, each available from Dow. Each of these is an ethylene/octene-1 copolymer with a 6.5 weight % octene content, and a density of 0.920 grams/cc.

## Claims

1. A process for in-situ polymerization of a polyvinylidene chloride layered silicate nanocomposite composition by a suspension process comprising:

    a) preparing a monomers pre-mix comprising

        i) vinylidene chloride, and
        ii) a second monomer selected from

            (a) vinyl chloride,
            (b) styrene,
            (c) vinyl acetate,
            (d) acrylonitrile, and
            (e) $C_1$-$C_{12}$ alkyl esters of (meth)acrylic acid;

    b) preparing an aqueous dispersion of a nanoclay;
    c) dispersing the aqueous dispersion of a nanoclay into the monomers pre-mix, wherein the nanoclay is present in an amount up to 10% by weight of the total monomer content of the dispersion;
    d) providing a polymerization reactor,
    e) purging the polymerization reactor with nitrogen;
    f) heating the polymerization reactor to a reaction temperature;
    g) pumping the monomers pre-mix, with the aqueous dispersion of a nanoclay dispersed therein, into the polymerization reactor;
    h) agitating the monomers pre-mix, with the aqueous dispersion of a nanoclay dispersed therein, in the polymerization reactor at a desired agitation speed;
    i) starting a polymerization reaction;
    j) continuing the polymerization reaction until a predefined conversion of polymer is reached, and exfoliation of the nanoclay has been achieved;
    k) stripping the polymer of unreacted monomers;
    l) washing the stripped polymer;
    m) separating the washed polymer from water; and
    n) drying the polymer.

2. A process for in-situ polymerization of a polyvinylidene chloride layered silicate nanocomposite composition by a suspension process comprising:

    a) preparing a monomers pre-mix comprising

        i) vinylidene chloride, and
        ii) a second monomer selected from

            (a) vinyl chloride,
            (b) styrene,

(c) vinyl acetate,
(d) acrylonitrile, and
(e) $C_1$-$C_{12}$ alkyl esters of (meth)acrylic acid;

b) preparing an aqueous dispersion of a nanoclay to produce a nanoclay slurry, wherein the aqueous dispersion of a nanoclay is pH adjusted to from 6 to 8;
c) providing a polymerization reactor;
d) purging the polymerization reactor with nitrogen;
e) heating the polymerization reactor to a reaction temperature;
f) pumping the monomers pre-mix into the polymerization reactor;
g) starting a polymerization reaction;
h) agitating the monomers pre-mix in the polymerization reactor at a desired agitation speed;
i) continuing the polymerization reaction until polymer conversion has reached at least 20%;
j) pumping the nanoclay slurry into the polymerization reactor;
k) continuing the polymerization reaction until a predefined conversion of polymer is reached, and exfoliation of the nanoclay has been achieved;
l) stripping the polymer of unreacted monomers;
m) washing the stripped polymer,
n) separating the washed polymer from water; and
o) drying the polymer.

**3.** A process for preparation of a polyvinylidene chloride layered silicate nanocomposite composition by a suspension process comprising:

a) preparing a monomers pre-mix comprising

i) vinylidene chloride, and
ii) a second monomer selected from

(a) vinyl chloride,
(b) styrene,
(c) vinyl acetate,
(d) acrylonitrile, and
(e) $C_1$-$C_{12}$ alkyl esters of (meth)acrylic acid;

b) preparing an aqueous dispersion of a nanoclay to produce a nanoclay slurry;
c) providing a polymerization reactor;
d) purging the polymerization reactor with nitrogen;
e) heating the polymerization reactor to a reaction temperature;
f) pumping the monomers pre-mix into the polymerization reactor;
g) starting a polymerization reaction;
h) agitating the monomers pre-mix in the polymerization reactor at a desired agitation speed;
i) continuing the polymerization reaction until a predefined conversion of polymer is reached; then
j) pumping the nanoclay slurry into the polymerization reactor;
k) continuing the agitation until exfoliation of the nanoclay has been achieved;
l) stripping the polymer of unreacted monomers;
m) washing the stripped polymer;
n) separating the washed polymer from water; and
o) drying the polymer.

**4.** The process of any one of claims 1 to 3 wherein the nanoclay is selected from kaolin, talc, smectite, vermiculite or mica.

**Patentansprüche**

**1.** Verfahren zur in-situ Polymerisation einer Polyvinylidenchlorid/Schichtsilikat-Nanoverbundzusammensetzung durch ein Suspensionsverfahren, bei dem

a) eine Monomerenvormischung hergestellt wird, die

i) Vinylidenchlorid und
ii) ein zweites Monomer ausgewählt aus

(a) Vinylchlorid,
(b) Styrol,
(c) Vinylacetat,
(d) Acrylnitril und
(e) $C_1$-$C_{12}$ Alkylestern von (Meth)Acrylsäure umfasst;

b) eine wässrige Dispersion eines Nano-Tons hergestellt wird;
c) die wässrige Dispersion eines Nano-Tons in der Monomerenvormischung dispergiert wird, wobei der Nano-Ton in einer Menge von bis zu 10 Gew.% des gesamten Monomergehalts der Dispersion vorhanden ist;
d) ein Polymerisationsreaktor bereitgestellt wird;
e) der Polymerisationsreaktor mit Stickstoff gespült wird;
f) der Polymerisationsreaktor auf eine Reaktionstemperatur erwärmt wird;
g) die Monomerenvormischung mit der darin dispergierten wässrigen Dispersion eines Nano-Tons in den Polymerisationsreaktor gepumpt wird;
h) die Monomerenvormischung mit der darin dispergierten wässrigen Dispersion eines Nano-Tons in dem Polymerisationsreaktor bei einer gewünschten Rührgeschwindigkeit gerührt wird;
i) die Polymerisationsreaktion in Gang gesetzt wird;
j) die Polymerisationsreaktion fortgesetzt wird, bis eine vorgegebene Umsetzung zu Polymer erreicht ist und eine Aufblätterung des Nano-Tons erzielt worden ist;
k) nicht umgesetzte Monomere von dem Polymer abgestrippt werden;
l) das abgestrippte Polymer gewaschen wird;
m) das gewaschene Polymer vom Wasser getrennt wird; und
n) das Polymer getrocknet wird.

**2.** Verfahren zur in-situ Polymerisation einer Polyvinylidenchlorid/Schichtsilikat-Nanoverbundzusammensetzung durch ein Suspensionsverfahren, bei dem

a) eine Monomerenvormischung hergestellt wird, die

i) Vinylidenchlorid und
ii) ein zweites Monomer ausgewählt aus

(f) Vinylchlorid,
(g) Styrol,
(h) Vinylacetat,
(i) Acrylnitril und
(j) $C_1$-$C_{12}$ Alkylestern von (Meth)Acrylsäure umfasst;

b) eine wässrige Dispersion eines Nano-Tons zur Herstellung einer Nano-Ton-Aufschlämmung hergestellt wird, wobei die wässrige Dispersion eines Nano-Tons auf einen pH-Wert von 6-8 eingestellt wird;
c) ein Polymerisationsreaktor bereitgestellt wird;
d) der Polymerisationsreaktor mit Stickstoff gespült wird;
e) der Polymerisationsreaktor auf eine Reaktionstemperatur erwärmt wird;
f) die Monomerenvormischung in den Polymerisationsreaktor gepumpt wird;
g) eine Polymerisationsreaktion eingeleitet wird;
h) die Monomerenvormischung in dem Polymerisationsreaktor mit einer gewünschten Rührgeschwindigkeit gerührt wird;
i) die Polymerisationsreaktion fortgesetzt wird, bis die Umsetzung zu Polymer mindestens 20% erreicht hat;
j) die Nano-Ton-Aufschlämmung in den Polymerisationsreaktor gepumpt wird;
k) die Polymerisationsreaktion fortgesetzt wird, bis eine vorgegebene Umsetzung zu Polymer erreicht ist und eine Aufblätterung des Nano-Tons erzielt worden ist;
l) nicht umgesetzte Monomere von dem Polymer abgestrippt werden;
m) das abgestrippte Polymer gewaschen wird;

n) das gewaschene Polymer vom Wasser getrennt wird; und
o) das Polymer getrocknet wird.

**3.** Verfahren zur Herstellung einer Polyvinylidenchlorid/Schichtsilikat-Nanoverbundzusammensetzung durch ein Suspensionsverfahren, bei dem

a) eine Monomerenvormischung hergestellt wird, die

i) Vinylidenchlorid und
ii) ein zweites Monomer ausgewählt aus

(a) Vinylchlorid,
(b) Styrol,
(c) Vinylacetat,
(d) Acrylnitril und
(e) $C_1$-$C_{12}$ Alkylestern von (Meth)Acrylsäure umfasst;

b) eine wässrige Dispersion eines Nano-Tons zur Herstellung einer Nano-Ton-Aufschlämmung hergestellt wird;
c) ein Polymerisationsreaktor bereitgestellt wird;
d) der Polymerisationsreaktor mit Stickstoff gespült wird;
e) der Polymerisationsreaktor auf eine Reaktionstemperatur erwärmt wird;
f) die Monomerenvormischung in den Polymerisationsreaktor gepumpt wird;
g) eine Polymerisationsreaktion eingeleitet wird;
h) die Monomerenvormischung in dem Polymerisationsreaktor mit einer gewünschten Rührgeschwindigkeit gerührt wird;
i) die Polymerisationsreaktion fortgesetzt wird, bis eine vorgegebene Umsetzung zu Polymer erreicht ist; dann
j) die Nano-Ton-Aufschlämmung in den Polymerisationsreaktor gepumpt wird;
k) das Rühren fortgesetzt wird, bis Aufblätterung des Nano-Tons erzielt worden ist;
l) nicht umgesetzte Monomere von dem Polymer abgestrippt werden;
m) das abgestrippte Polymer gewaschen wird;
n) das gewaschene Polymer vom Wasser getrennt wird; und
o) das Polymer getrocknet wird.

**4.** Verfahren nach einem der Ansprüche 1 bis 3, bei dem der Nano-Ton ausgewählt ist aus Kaolin, Talk, Smektit, Vermiculit oder Glimmer.

**Revendications**

**1.** Procédé d'obtention, par polymérisation en suspension *in situ,* d'une composition nanocomposite de poly(chlorure de vinylidène) et de silicate feuilleté, lequel procédé comporte les étapes suivantes :

a) préparer un mélange de monomères qui comprend :

i) du chlorure de vinylidène,
ii) et un deuxième monomère choisi parmi

- du chlorure de vinyle,
- du styrène,
- de l'acétate de vinyle,
- de l'acrylonitrile,
- et les esters d'alkyle en $C_{1\text{-}12}$ d'acide acrylique ou méthacrylique ;

b) préparer une dispersion aqueuse de nanoargile ;
c) disperser cette dispersion aqueuse de nanoargile dans le mélange de monomères, la nanoargile se trouvant présente en une quantité valant jusqu'à 10 % du poids de la quantité totale de monomères contenue dans la dispersion ;
d) prendre un réacteur de polymérisation ;

e) purger ce réacteur de polymérisation avec de l'azote ;
f) chauffer ce réacteur de polymérisation jusqu'à une certaine température de réaction ;
g) envoyer par pompage, dans le réacteur de polymérisation, le mélange de monomères au sein duquel est dispersée la dispersion aqueuse de nanoargile ;
h) brasser dans le réacteur de polymérisation, à la vitesse d'agitation voulue, le mélange de monomères au sein duquel est dispersée la dispersion aqueuse de nanoargile ;
i) faire démarrer une réaction de polymérisation ;
j) poursuivre la réaction de polymérisation jusqu'à ce que soit atteint un taux prédéfini de conversion en polymère et que se soit accomplie une certaine exfoliation de la nanoargile ;
k) épurer le polymère en le débarrassant des monomères demeurés sans réagir ;
l) laver le polymère épuré ;
m) séparer le polymère lavé de l'eau de lavage ;
n) et faire sécher le polymère.

**2.** Procédé d'obtention, par polymérisation en suspension *in situ,* d'une composition nanocomposite de poly(chlorure de vinylidène) et de silicate feuilleté, lequel procédé comporte les étapes suivantes :

a) préparer un mélange de monomères qui comprend :

i) du chlorure de vinylidène,
ii) et un deuxième monomère choisi parmi

- du chlorure de vinyle,
- du styrène,
- de l'acétate de vinyle,
- de l'acrylonitrile,
- et les esters d'alkyle en $C_{1-12}$ d'acide acrylique ou méthacrylique ;

b) préparer une dispersion aqueuse d'une nanoargile pour produire une suspension de nanoargile, le pH de la dispersion aqueuse de nanoargile étant ajusté à une valeur de 6 à 8 ;
c) prendre un réacteur de polymérisation ;
d) purger ce réacteur de polymérisation avec de l'azote ;
e) chauffer ce réacteur de polymérisation jusqu'à une certaine température de réaction ;
f) envoyer par pompage le mélange de monomères dans le réacteur de polymérisation ;
g) faire démarrer une réaction de polymérisation ;
h) brasser le mélange de monomères dans le réacteur de polymérisation,
à la vitesse d'agitation voulue ;
i) poursuivre la réaction de polymérisation jusqu'à ce que soit atteint un taux de conversion en polymère d'au moins 20 % ;
j) envoyer par pompage la suspension de nanoargile dans le réacteur de polymérisation ;
k) poursuivre la réaction de polymérisation jusqu'à ce que soit atteint un taux prédéterminé de conversion en polymère et que se soit accomplie une certaine exfoliation de la nanoargile ;
l) épurer le polymère en le débarrassant des monomères demeurés sans réagir ;
m) laver le polymère épuré ;
n) séparer le polymère lavé de l'eau de lavage ;
o) et faire sécher le polymère.

**3.** Procédé de préparation, par un procédé en suspension, d'une composition nanocomposite de poly(chlorure de vinylidène) et de silicate feuilleté, lequel procédé comporte les étapes suivantes :

a) préparer un mélange de monomères qui comprend :

i) du chlorure de vinylidène,
ii) et un deuxième monomère choisi parmi

- du chlorure de vinyle,
- du styrène,
- de l'acétate de vinyle,

- de l'acrylonitrile,
- et les esters d'alkyle en $C_{1-12}$ d'acide acrylique ou méthacrylique ;

b) préparer une dispersion aqueuse d'une nanoargile, pour produire une suspension de nanoargile ;
c) prendre un réacteur de polymérisation ;
d) purger ce réacteur de polymérisation avec de l'azote ;
e) chauffer ce réacteur de polymérisation jusqu'à une certaine température de réaction ;
f) envoyer par pompage le mélange de monomères dans le réacteur de polymérisation ;
g) faire démarrer une réaction de polymérisation ;
h) brasser le mélange de monomères dans le réacteur de polymérisation, à la vitesse d'agitation voulue ;
i) poursuivre la réaction de polymérisation jusqu'à ce que soit atteint un taux prédéfini de conversion en polymère ;
j) envoyer ensuite par pompage la suspension de nanoargile dans le réacteur de polymérisation ;
k) poursuivre le brassage jusqu'à ce que se soit accomplie une certaine exfoliation de la nanoargile ;
l) épurer le polymère en le débarrassant des monomères demeurés sans réagir ;
m) laver le polymère épuré ;
n) séparer le polymère lavé de l'eau de lavage ;
o) et faire sécher le polymère.

**4.** Procédé conforme à l'une des revendications 1 à 3, pour lequel la nanoargile est choisie parmi les kaolin, talc, smectite, vermiculite et mica.

FIG. 1

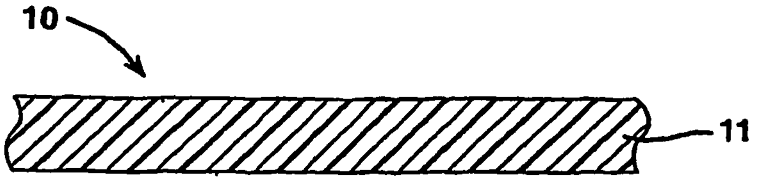


FIG. 2

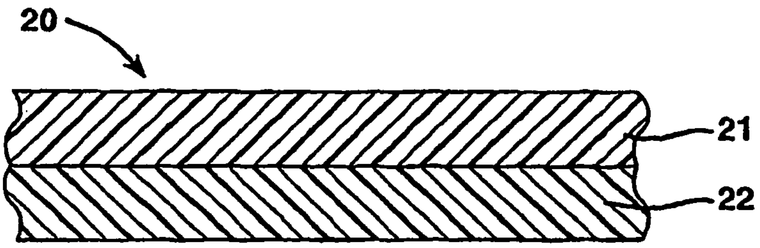


FIG. 3

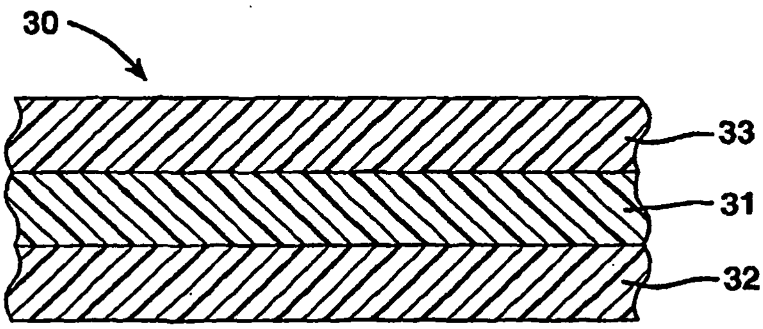


FIG. 4

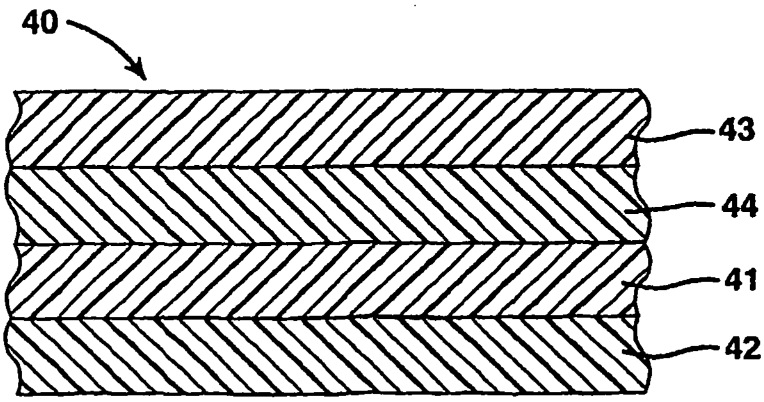

FIG. 5 PRIOR ART

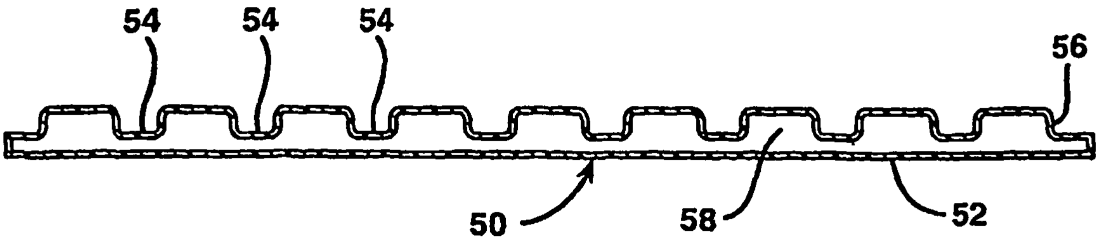


FIG. 6 PRIOR ART

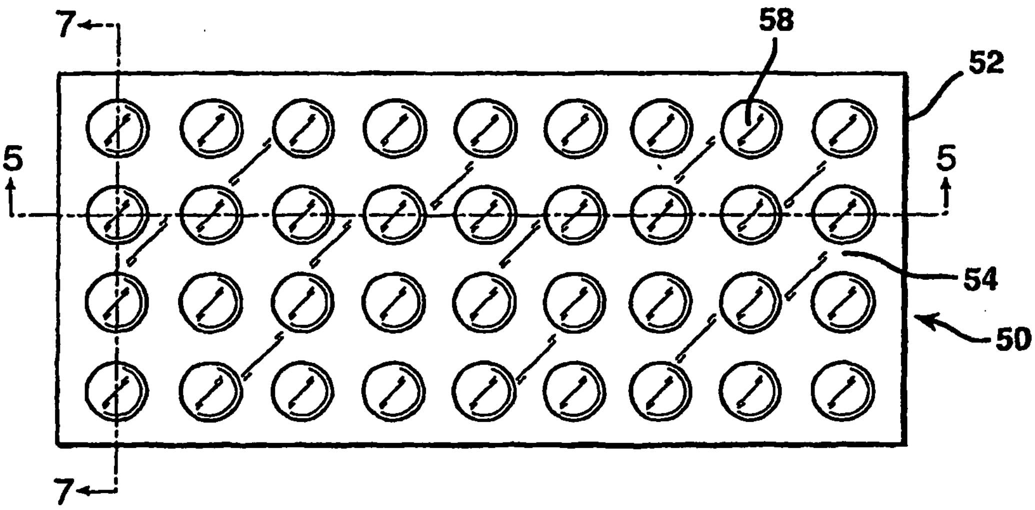


FIG. 7 PRIOR ART

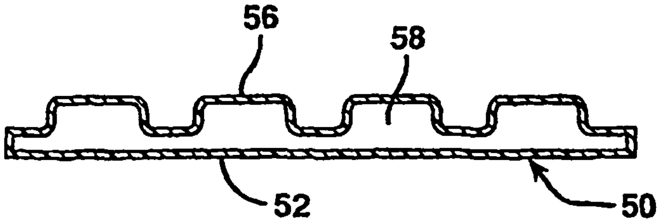

FIG. 8

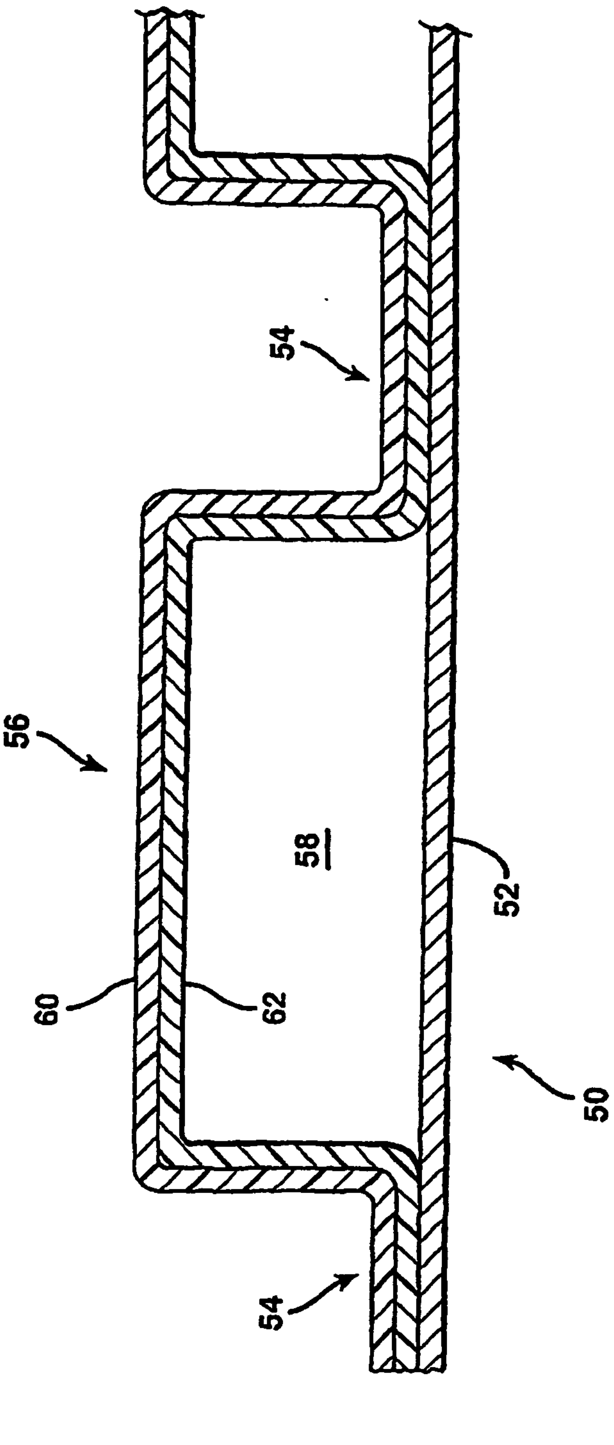

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6673406 B, Bekele
- US 3741253 A, Brax
- US 4278738 A, Brax
- US 4284458 A, Schirmer
- US 4551380 A, Schoenberg
- US 4112181 A, Baird, Jr.
- US 4064296 A, Bornstein
- US 4120716 A, Bonet
- US 4879430 A, Hoffman


### Non-patent literature cited in the description


- Annual Book of ASTM Standards. 1990, vol. 08.02, 368-371